# EUROPEAN PATENT APPLICATION

(11) **EP 0 959 465 A2**
(43) Date of publication of application: **24.11.1999**
(21) Application number: 98112056.1
(22) Date of filing: 30.06.1998
(51) Int. Cl.: G11B 7/26, G11B 7/24, G11B 23/00

(54) **Laminated disk and method of producing the same**

(30) Priority: 19.05.1998 JP 13680898
(71) Applicant: Toshiba-Emi Limited, Minato-ku, Tokyo 107-0052 (JP)
(72) Inventor: Kakinuma, Keiji, c/o TOSHIBA-EMI LIMITED, Gotenba-shi, Shizuoka, 412-0046 (JP)
(74) Representative: Reinhard - Skuhra - Weise & Partner

(57) **Abstract**

A method of producing a laminated disk which can be prevented from including trapped air and degrading in tilt and jitter is provided. The method includes the steps of: forming a reflective film on the laminating surface of a recorded disk; forming a silicon film or a silicon compound film on the laminating surface of a transparent substrate; and applying a ultraviolet-setting adhesive to the silicon film or the silicon compound film by a spinner so as to laminate the recorded disk on the transparent substrate. The silicon film or the silicon compound film dramatically improves the wetting of the transparent substrate.

## Description

### BACKGROUND OF THE INVENTION

### Field of the Invention

The present invention relates to a two-disk laminated disk for DVD and the like, and also to a method of producing the same. To laminate two disks, energy-radiation setting resin such as ultraviolet setting resin, which is liquid at room temperature, is used as an adhesive, and one side or both sides of the two disks are subjected to energy radiation. Related Art

To produce a two-disk laminated disk, a transparent disk substrate made of polycarbonate or the like with information pits formed thereon are usually prepared by injection molding.

A DVD single-sided single layer disk has a reflective film made of aluminum or the like on the surface of the pits on the molded record reading side (hereinafter referred to as "recorded disk") of the disk. For instance, Japanese Patent Application Laid-Open No. 5-20714 discloses a method in which a ultraviolet-setting resin is applied onto the reflective film in a doughnut-like shape, the transparent substrate disk (hereinafter referred to as "dummy disk") is placed on the reflective film, the two laminated disks are rotated so that the resin (adhesive) can be spread all over the disk surface (spinner process), and one side or both sides of the disks are subjected to ultraviolet radiation so as to cure and laminate the disks.

By the above laminating method, however, the ultraviolet-setting resin is liquid before setting, and there is often a problem that air is trapped between the surface of the dummy disk and the ultraviolet-setting resin, when the recorded disk with an aluminum reflective film and a doughnut-like ultraviolet-setting resin applied thereon is laminated on the dummy disk that is a transparent substrate made of polycarbonate. This is because the surface tension between the surface of the dummy disk and the ultraviolet-setting resin is unbalanced, which is to say, the wetting of the resin is poor.

The resin is not yet spread all over the disk at the time of lamination of the recorded disk and the dummy disk. It is spread just outside the doughnut shape of the previously applied ultraviolet-setting resin. The ultraviolet-setting resin is spread all over the disk surface by high speed rotation, and at the same time, extra ultraviolet-setting resin is severed. Even if no air is trapped at the time of the lamination, it may appear at the time of the severing of the ultraviolet-setting resin by rotation.

This occurs for the same reason as the previous one, except that, in this case, air is trapped as the marks of the resin shaken off the disk surface at the time of severing.

Air is more likely to be trapped on the surface of the dummy disk than on the surface of the recorded disk. They tend to appear when the wetting is poor on the polycarbonate surface for the ultraviolet-setting resin. Table 1 shows the results of comparisons in the number of disks containing trapped air among 100 laminated disks each having a thin metal film formed on the laminating surface of the dummy disk. For the laminating surfaces (3) to (6), the substrate (2)(molded product PC1) is used.

As is apparent from the comparison between the polycarbonate surfaces of the substrates PC1 and PC2 in Table 1, the number of disks with trapped air greatly varies depending on the condition of the surface on the molding side of a mold or a stamper for molding the substrate of the injection molding device. The air is trapped on the substrate PC1 due to impurities such as fat and oil in the form of such a thin layer that it cannot be recognized by an ordinary microscope. The impurities on the surface of the mold or stamper is transferred onto the disk surface, and at the time of lamination of the substrate and the ultraviolet-setting resin, the transferred impurities flick the ultraviolet-setting resin, causing air to be trapped on the disk surface. Even with such substrate that tends to contain more trapped air, if molding is performed many times, the number of disks with trapped air can be reduced as in PC2. This is because the impurities such as fat and oil on the surface of the mold or the stamper can be gradually removed as molding or transferring is repeated.

As the trapped air can be seen through the dummy disk that is a transparent substrate, they adversely affect the appearance of the product. Furthermore, the ultraviolet-setting resin contracts more or less at the time of setting, while the trapped air tends to expand due to the temperature rise caused by the ultraviolet radiation. Accordingly, a volume difference is caused between the air-trapped area and non air-trapped area, and as a result, the air-trapped area stands out when being seen from the aluminum surface of the recorded disk side, causing tilt and jitter to the disk.

In the case of a DVD one-sided disk, it is usual to perform printing a disk title and the like on the surface of the dummy disk. As shown in Table 1, if an Au film or silicon film, through which ultraviolet rays pass through, of 20 nm or more in thickness is formed on the laminating surface between the dummy disk and the ultraviolet-setting resin, the color of such film will affect the appearance of the dummy disk, and the color tone on the disk surface will be degraded. Among of all, an Au film of (5) will dramatically increase the production costs. In the case of a 50 cm thick aluminum film of (3), the color tone in design will not be degraded, but the ultraviolet ray transmission rate is extremely low, which is not suitable for setting the ultraviolet-setting resin as an adhesive.
In the case where a 20 nm thick aluminum film of (4) is formed on the surface of the dummy disk, there is the same problem as with the Au film of (5) and a thick silicon film of (6) in that the color of the dummy disk becomes dark and the color tone degraded.

Table 1 shows the comparisons among the types of the adhesive laminating surface and the numbers of laminated disks containing trapped air.

**[Table 1]**

| laminating surface of the dummy disk | the number of laminated disks with trapped air | ultraviolet ray transmission rate (%) |
|---|---|---|
| (1) PC (molded product: PCi) | 41 | 82 |
| (2) PC (molded product: PC2) | 9 | 82 |
| (3) Al film of 50 nm in thickness | 5 | 0.9 |
| (4) Al film of 20 nm in thickness | 4 | 20 |
| (5) Au film of 20 nm in thickness | 4 | 23 |
| (6) Si film of 20 nm in thickness | 0 | 9 |

An aluminum film of 70 nm in thickness is formed on the laminating surface of the recorded disk.

Each number of disks containing trapped air indicates the number of laminated disks containing trapped air among every 100 laminated disks.

The ultraviolet ray transmission rate is calculated from the light emitted by a ultraviolet ray irradiator "UVA-402/1MNSC9-WJ02 (the lamp is UVL-4001M3-N1)" manufactured by Ushio Inc. and the value of the light transmitted through the disks (1) to (6) determined by a ultraviolet ray integrating light meter "UIT-150 (the sensor is UVD-S365)" manufactured by Ushio Inc.

### SUMMARY OF THE INVENTION

An object of the present invention is to provide a laminated disk which is prevented from containing trapped air so as to avoid tilt and jitter, and a method of producing the same.

Another object of the present invention is to provide a laminated disk with no degradation in print color tone and little air trapped, and a method of steadily mass-producing the same.

In accordance with a first aspect of the present invention, the method of producing a laminated disk includes the steps of: forming a reflective film on the laminating surface of a recorded disk; forming a silicon (Si) film or a silicon compound (SiOx, SiNx, SiCx) film on the laminating surface of a transparent substrate; and applying an energy-radiation setting adhesive onto the silicon film or the silicon compound film on the laminating surface of the transparent substrate by a spinner so as to laminate the recorded disk on the transparent substrate. By this method, the silicon film or the silicon compound film dramatically improves wetting of the transparent substrate, so that a large number of laminated disks including little trapped air can be steadily produced.

In accordance with a second aspect of the present invention, the silicon film formed on the laminating surface of the transparent substrate is 1 to 7 nm in thickness. With this structure, the silicon film dramatically improves the wetting of the energy-radiation setting adhesive, so that a method of producing a laminated disk containing little trapped air can be provided.

In accordance with a third aspect of the present invention, the silicon compound film formed on the laminating surface of the transparent substrate is 1 to 9 nm in thickness. With this structure, the silicon compound film dramatically improves the wetting of the energy-radiation setting adhesive, so that a method of producing a laminated disk with little air trapped can be provided.

In accordance with a fourth aspect of the present invention, the silicon film formed on the laminating surface of the transparent substrate is 1 to 6 nm in thickness. With this structure, a method of producing a laminated disk with little air trapped and little color tone degradation can be provided.

In accordance with a fifth aspect of the present invention, the silicon compound film formed on the laminating surface of the transparent substrate is 1 to 7 nm in thickness. With this structure, a method of producing a laminated disk with little air trapped and little color tone degradation can be provided.

In accordance with a sixth aspect of the present invention, the silicon film or the silicon compound film formed on the laminating surface of the transparent substrate is 1 to 5 nm in thickness. With this structure, a method of producing a laminated disk containing with little air trapped and little color tone degradation can be provided.

In accordance with a seventh aspect of the present invention, the silicon film formed on the laminating surface of the transparent substrate is 2 to 5 nm in thickness. With this structure, a method of producing a laminated disk with little air trapped and little color tone degradation can be provided.

In accordance with an eighth aspect of the present invention, the silicon compound film formed on the laminating surface of the transparent substrate is 3 to 5 nm in thickness. With this structure, a method of producing a laminated disk with little air trapped and little color tone degradation can be provided.

In accordance with a ninth aspect of the present invention, the silicon film formed on the laminating surface of the transparent substrate is 2 to 4 nm in thickness. With this structure, a method of producing a laminated disk with no air trapped and no color tone degradation can be provided.

In accordance with a tenth aspect of the present invention, the silicon compound film formed on the laminating surface of the transparent substrate is 3 nm in thickness. With this structure, a method of producing a laminated disk with no air trapped and no color tone degradation can be provided.

In accordance with an eleventh aspect of the present invention, a laminated disk of the present invention includes: a recorded disk having a reflective film on the laminating surface thereof; a transparent substrate having a silicon film or a silicon compound film on the laminating surface thereof; and an energy-radiation setting adhesive layer interposed between the reflective film on the laminating surface of the recorded disk and the silicon film or the silicon compound film on the laminating surface of the transparent substrate. With this laminated disk, the silicon film or the silicon compound film dramatically improves wetting of the transparent substrate, so that a large number of laminated disks with little air trapped can be steadily produced.

In accordance with a twelfth aspect of the present invention, the silicon film formed on the laminating surface of the transparent substrate is 1 to 7 nm in thickness. With this structure, the silicon film dramatically improves the wetting of the energy-radiation setting adhesive, so that a laminated disk including little trapped air can be obtained.

In accordance with a thirteenth aspect of the present invention, the silicon compound film formed on the laminating surface of the transparent substrate is 1 to 9 nm in thickness. With this structure, the silicon compound film dramatically improves the wetting of the energy-radiation setting adhesive, so that a laminated disk including little trapped air can be obtained.

In accordance with a fourteenth aspect of the present invention, the silicon film formed on the laminating surface of the transparent substrate is 1 to 6 nm in thickness. With this structure, a laminated disk with little trapped air and little color tone degradation can be obtained.

In accordance with a fifteenth aspect of the present invention, the silicon compound film formed on the laminating surface of the transparent substrate is 1 to 7 nm in thickness. With this structure, a laminated disk with little air trapped and little color tone degradation can be obtained.

In accordance with a sixteenth aspect of the present invention, the silicon film or the silicon compound film formed on the laminating surface of the transparent substrate is 1 to 5 nm in thickness. With this structure, a laminated disk with little air trapped and little color tone degradation can be obtained.

In accordance with a seventeenth aspect of the present invention, the silicon film formed on the laminating surface of the transparent substrate is 2 to 5 nm in thickness. With this structure, a laminated disk with little air trapped and little color tone degradation can be obtained.

In accordance with an eighteenth aspect of the present invention, the silicon compound film formed on the laminating surface of the transparent substrate is 3 to 5 nm in thickness. With this structure, a laminated disk with little air trapped and little color tone degradation can be obtained.

In accordance with a nineteenth aspect of the present invention, the silicon film formed on the laminating surface of the transparent substrate is 2 to 4 nm in thickness. With this structure, a laminated disk with no air trapped and no color tone degradation can be obtained.

In accordance with a twentieth aspect of the present invention, the silicon compound formed on the laminating surface of the transparent substrate is 3 nm in thickness. With this structure, a laminated disk with no air trapped and no color tone degradation can be obtained.

The above and other objects and features of the present invention will be more apparent from the following description taken in conjunction with the accompanying drawings.

### BRIEF DESCRITION OF THE DRAWINGS

Fig. 1A is a sectional view of one embodiment of a laminated disk before lamination in accordance with the present invention;
Fig. 1B is a sectional view of the laminated disk of Fig. 1A after it is laminated; and
Fig. 2 is a schematic plan view of a device for manufacturing the laminated disk.

### DETAILED DESCRIPTION OF THE PREFERRED EMBODIMENTS

The following is a description of the embodiment of the present invention, with reference to the accompanying drawings.

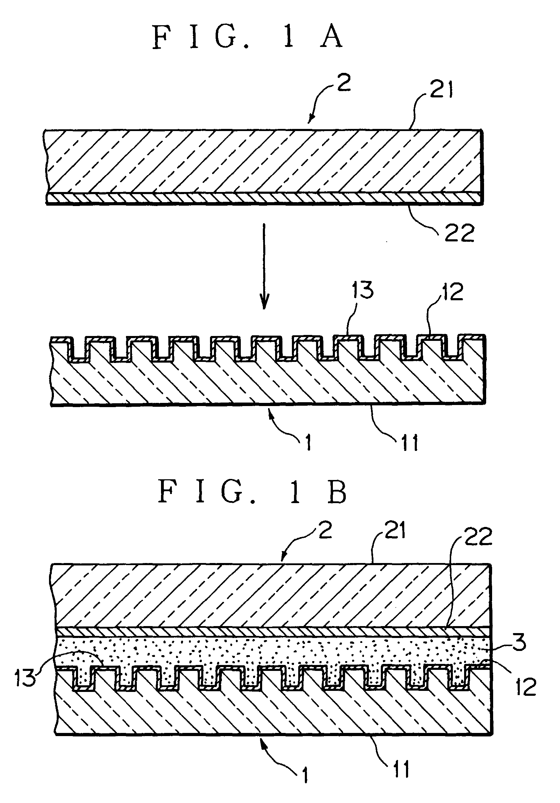

As shown in Fig. 1A, a recorded disk 1 having a reflective film 13, and a dummy disk 2 having a silicon film or a silicon compound film 22 formed in a later described manner. The reflective film 13 is formed on the pit surface 12 on the laminating surface side of a transparent substrate 11. The silicon film or silicon compound film 22 is disposed, by sputtering, on the laminating surface of the transparent substrate 21. As shown in Fig. 1B, a ultraviolet-setting adhesive (resin) 3 is applied between the recorded disk 1 and the dummy disk 2 to form a one-sided laminated disk for DVD.

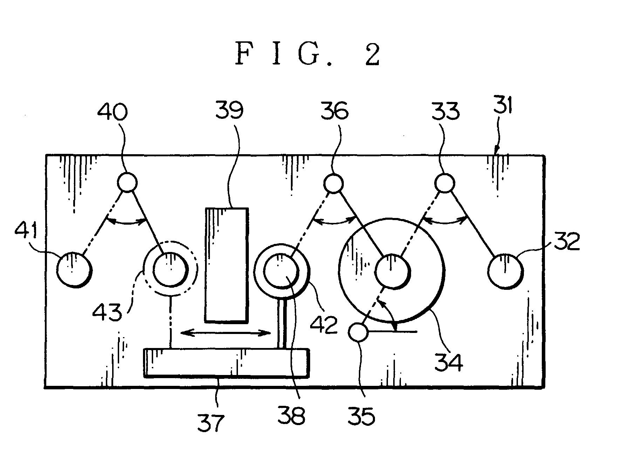

Fig. 2 is a schematic plan view of a device for producing the laminated disk.

The DVD one-sided laminated disk producing device 3 comprises a disk feeding position 32, a disk feeding arm 33, a spinner 34, a discharging nozzle 35, a laminated disk transporting arm 36, a UV lamp transporting arm 37 provided with a disk holder 38, a UV lamp 39, a fetching arm 40, and a disk discharging position 31.

The laminated disk producing device 31 first feeds the recorded disk 1 with the reflective film 13 facing upward to the disk feeding position 32. The disk transporting arm 33 then transports the recorded disk 1 from the disk feeding position 32 onto the rotating table of the spinner 34.

Next, the spinner head of the spinner 34 is lowered. The spinner head descends while keeping a distance from the upper surface of the recorded disk 1 by the thickness the dummy disk 2 with the silicon film or silicon compound film 22 formed on the laminating surface on the lower surface.

The recorded disk 1 transported to the spinner 34 is rotated by a motor (not shown), so that the discharging nozzle 35 applies the ultraviolet-setting adhesive 3 to it. Here, the rotation speed is preferably low and in the range of 30 to 100 rpm.

The dummy disk 2 is then fed to the disk feeding position 32, and the disk feeding arm 33 transports the dummy disk 2 onto the recorded disk 1 with the ultraviolet-setting adhesive 3 applied to it.

The rotating table is then rotated at a high speed of 2000 to 4000 rpm so that the adhesive between the pair of disks are spread to have a predetermined film thickness. After that, the spinner head of the spinner 34 is lifted. The laminated disk transporting arm 36 then transports the pair of disks to a lamination station 42 and places them onto the disk holder 38.

The pair of disks placed on the disk holder 38 are then subjected to ultraviolet radiation by the UV lamp 39 during the transportation by the UV lamp transporting arm 37. The ultraviolet-setting adhesive 3 is cured by the ultraviolet radiation.

When the UV lamp transporting arm 37 reaches a transporting position 43, the laminated disks with the cured ultraviolet-setting adhesive 3 are transported to the discharging position 41 by the fetching am 40.

The laminated disks are fetched from the disk discharging position 41, and the UV lamp transporting am 37 is returned to the lamination station 42, where the UV lamp transporting arm 37 awaits next disks.

In the method of producing the laminated disks of the present invention, a silicon or silicon compound (SiOx, SiNx, or SiCx) film of a thickness specified later is formed on the laminating surface of the dummy disk 2 by sputtering or the like, before the ultraviolet-setting adhesive 3 is applied to the silicon or silicon compound film on the laminating surface of the dummy disk 2.

The exact component ratio (x) of the silicon or silicon compound film is not apparent, but the results of comparison between the embodiment and a comparative example of a silicon compound film are shown below in Table 2.

**[Table 2]**

| laminating surface of the dummy disk | the number of disks with trapped air | color tone | ultraviolet ray transmission rate(%) |
|---|---|---|---|
| (1) no film formed ((1) of Table 1) | 41 | A | 82 |
| (2) Si : 0.5 nm | 36 | A | 82 |
| (3) Si : 1 nm | 12 | A | 82 |
| (4) Si : 2 cm | 0 | A | 67 |
| (5) Si : 3 nm | 0 | A | 56 |
| (6) Si : 4 nm | 0 | A | 45 |
| (7) Si : 5 nm | 0 | A-B | 37 |
| (8) Si : 6 nm | 0 | B | 29 |
| (9) Si : 7 nm | 0 | C | 24 |
| (10) SiC : 0.5 nm | 38 | A | 82 |
| (11) SiC : 1 nm | 15 | A | 82 |
| (12) SiC : 3 nm | 0 | A | 67 |
| (13) SiC : 5 nm | 0 | A-B | 48 |
| (14) SiC : 7 nm | 0 | B | 38 |
| (15) SiC : 9 nm | 0 | C | 29 |

In Table 2, the number of disks with trapped air and the ultraviolet rays transmission rate are the same as in Table 1, and the substrate shown in (2) of Table 1 (molded product PC2) is used as the substrate for the dummy disk. In the column of color tone, "A" indicates cases where no color tone degradation is visually found, "B" indicates cases where no apparent color tone degradation is visually found, and "C" indicates cases where color tone degradation is visually apparent.

Also in Table 2, (1) is Comparative Example 1, (2) Comparative Example 2, (10) Comparative Example 3, (3) Example 1, (4) Example 2, (5) Example 3, (6) Example 4, (7) Example 5, (8) Example 6, (9) Example 7, (11) Example 8, (12) Example 9, (13) Example 10, (14) Example 11, and (15) Example 12.

Before the ultraviolet-setting adhesive is applied to the mold dummy disk, a silicon or silicon compound (SiOx, SiNx, SiCx) film of 1 to 5 nm in thickness is formed on the laminating surface of the dummy disk by sputtering or the like. Such method of producing laminated disks enables steady production of a large number of DVD one-sided layer laminated disks with little degradation in print color tone and little trapped air.

Another method of producing laminated disks with little trapped air includes the steps of forming a silicon film of 1 to 7 nm in thickness on the laminating surface of the transparent substrate, and then applying the ultraviolet-setting adhesive to the laminating surface of the transparent substrate.

Yet another method of producing laminated disks with little trapped air includes the steps of forming a silicon compound film of 1 to 9 nm on the laminating surface of the transparent substrate, and then applying the ultraviolet-setting adhesive to the laminating surface of the transparent substrate.

Still another method of producing laminated disks with little trapped air and little color tone degradation includes the steps of forming a silicon film of 1 to 6 nm in thickness on the laminating surface of the transparent substrate, and then applying the ultraviolet-setting adhesive to the laminating surface of the transparent substrate.

Another method of producing laminated disks with little trapped air and little color tone degradation includes the steps of forming a silicon compound film of 1 to 7 nm in thickness on the laminating surface of the transparent substrate, and then applying the ultraviolet-setting adhesive to the laminating surface of the transparent substrate.

Yet another method of producing laminated disks with little trapped air and less color tone degradation includes the steps of forming a silicon film of 2 to 5 nm in thickness on the laminating surface of the transparent substrate, and then applying the ultraviolet-setting adhesive to the laminating surface of the transparent substrate.

Still another method of producing laminated disks with little trapped air and less color tone degradation includes the steps of forming a silicon compound layer of 3 to 5 nm in thickness on the laminating surface of the transparent substrate, and then applying the ultraviolet-setting adhesive to the laminating surface of the transparent substrate.

Another method of producing laminated disks with no trapped air and no color tone degradation includes the steps of forming a silicon layer of 2 to 4 nm in thickness on the laminating surface of the transparent, and then applying the ultraviolet-setting adhesive to the laminating surface of the transparent substrate.

Yet another method of producing laminated disks with no trapped air and no color tone degradation includes the steps of forming a silicon compound layer of 3 nm in thickness on the laminating surface of the transparent substrate, and then applying the ultraviolet-setting adhesive to the laminating surface of the transparent substrate.

A laminated disk with little trapped air comprises a recorded disk having a reflective film formed on its laminating surface, a transparent substrate having a silicon film of 1 to 7 nm in thickness formed on its laminating surface, and a ultraviolet-setting adhesive layer interposed between the laminating surfaces of the recorded disk and the transparent substrate.

Another laminated disk with little trapped air comprises a recorded disk having a reflective film formed on its laminating surface, a transparent substrate having a silicon compound film of 1 to 9 nm in thickness formed on its laminating surface, and a ultraviolet-setting adhesive layer interposed between the laminating surfaces of the recorded disk and the transparent substrate.

Yet another laminated disk with little trapped air and little color tone degradation comprises a recorded disk having a reflective film formed on its laminating surface, a transparent substrate having a silicon film of 1 to 6 nm in thickness formed on its laminating surface, and a ultraviolet-setting adhesive layer interposed between the laminating surfaces of the recorded disk and the transparent substrate.

Still another laminated disk with little trapped air and little color tone degradation comprises a recorded disk having a reflective film formed on its laminating surface, a transparent substrate having a silicon compound film of 1 to 7 nm in thickness formed on its laminating surface, and a ultraviolet-setting adhesive layer interposed between the laminating surfaces of the recorded disk and the transparent substrate.

Another laminated disk with little trapped air and less color tone degradation comprises a recorded disk having a reflective film formed on its laminating surface, a transparent substrate having a silicon film of 2 to 5 nm in thickness formed on its laminating surface, and a ultraviolet-setting adhesive layer interposed between the laminating surfaces of the recorded disk and the transparent substrate.

Yet another laminated disk with little trapped air and less color tone degradation comprises a recorded disk having a reflective surface formed on its laminating surface, a transparent substrate having a silicon compound film of 3 to 5 nm in thickness formed on its laminating surface, and a ultraviolet-setting adhesive layer interposed between the laminating surfaces of the recorded disk and the transparent substrate.

Still another laminated disk with no trapped air and no color tone degradation comprises a recorded disk having a reflective film formed on its laminating surface, a transparent substrate having a silicon film of 2 to 4 nm in thickness formed on its laminating surface, and a ultraviolet-setting adhesive layer interposed between the laminating surfaces of the recorded disk and the transparent substrate.

Yet another laminated disk with no trapped air and no color tone degradation comprises a recorded disk having a reflective film formed on its laminating surface, a transparent substrate having a silicon compound film of 3 nm in thickness formed on its laminating surface, and a ultraviolet-setting adhesive layer interposed between the laminating surfaces of the recorded disk and the transparent substrate.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.
Summarizing, the following embodiments are included in the present invention:
1. A method of producing a laminated disk, comprising the steps of:
   forming a reflective film on the laminating surface of a recorded disk;
   forming a silicon film on the laminating surface of a transparent substrate;
   applying an energy-radiation setting adhesive onto the silicon film on the laminating surface of the transparent surface by a spinner; and
   laminating the recorded disk on the transparent substrate.
2. The method of producing a laminated disk according to No.1, wherein
   said silicon film formed on the laminating surface of the transparent substrate is 1 to 7 nm in thickness.
3. The method of producing a laminated disk according to No. 1, wherein
   said silicon film formed on the laminating surface of the transparent substrate is 1 to 6 nm in thickness.
4. The method of producing a laminated disk according to No.1, wherein
   said silicon film formed on the laminating surface of the transparent substrate is 1 to 5 nm in thickness.
5. The method of producing a laminated disk according to No.1 , wherein
   said silicon film formed on the laminating surface of the transparent substrate is 2 to 5 nm in thickness.
6. The method of producing a laminated disk according to No.1, wherein
   said silicon film formed on the laminating surface of the transparent subsrate is 2 to 4 nm in thickness.
7. A method of producing a laminated disk, comprising the steps of:
   forming a reflective film on the laminating surface of a recorded disk;
   forming a silicon compound film on the laminating surface of a transparent substrate;
   applying an energy-radiation setting adhesive onto the silicon compound film on the laminating surface of the transparent surface by a spinner; and
   laminating the recorded disk on the transparent substrate.
8. The method of producing a laminated disk according to No.7 , wherein
   said silicon compound film formed on the laminating surface of the transparent substrate is 1 to 9 nm in thickness.
9. The method of producing a laminated disk according to No. 7, wherein
   said silicon compound film formed on the laminating surface of the transparent substrate is 1 to 7 nm in thickness.
10. The method of producing a laminated disk according to No. 7 , wherein
   said silicon compound film formed on the laminating surface of the transparent substrate is 1 to 5 nm in thickness.
11. The method of producing a laminated disk according to No.7 , wherein
   said silicon compound film formed on the laminating surface of the transparent substrate is 3 to 5 nm in thickness.
12. The method of producing a laminated disk according to No. 7 , wherein
   said silicon compound film formed on the laminating surface of the transparent substrate is 3 nm in thickness.
13. A laminated disk comprising:
   a recorded disk having a reflective film on the laminating surface thereof;
   a transparent substrate having a silicon film formed on the laminating surface thereof; and
   an energy-radiation setting adhesive layer interposed between the reflective film on the laminating surface of the recorded disk and the silicon film on the laminating surface of the transparent substrate.
14. The laminated disk according to No. 13 , wherein
   said silicon film formed on the laminating surface of the transparent substrate is 1 to 7 nm in thickness.
15. The laminated disk according to No. 13 wherein
   said silicon film formed on the laminating surface of the transparent substrate is 1 to 6 nm in thickness.
16. The laminated disk according to No. 13 , wherein
   said silicon film formed on the laminating surface of the transparent substrate is 1 to 5 nm in thickness.
17. The laminated disk according to No. 13 , wherein
   said silicon film formed on the laminating surface of the transparent substrate is 2 to 5 nm in thickness.
18. The laminated disk according to No. 13 , wherein
   said silicon film formed on the laminating surface of the transparent substrate is 2 to 4 nm in thickness.
19. A laminated disk comprising:
   a recorded disk having a reflective film on the laminating surface thereof;
   a transparent substrate having a silicon compound film formed on the laminating surface thereof; and
   an energy-radiation setting adhesive layer interposed between the reflective film on the laminating surface of the recorded disk and the silicon compound film on the laminating surface of the transparent substrate.
20. The laminated disk according to No. 19 , wherein
   said silicon compound film formed on the laminating surface of the transparent substrate is 1 to 9 nm in thickness.
21. The laminated disk according to No. 19 , wherein
   said silicon compound film formed on the laminating surface of the transparent substrate is 1 to 7 nm in thickness.
22. The laminated disk according to No. 19 , wherein
   said silicon compound film formed on the laminating surface of the transparent substrate is 1 to 5 nm in thickness.
23. The laminated disk according to No. 19 , wherein
   said silicon compound film formed on the laminating surface of the transparent substrate is 3 to 5 nm in thickness.
24. The laminated disk according to No. 19 wherein
   said silicon compound film formed on the laminating surface of the transparent substrate is 3 nm in thickness.

## Claims

1. A method of producing a laminated disk, comprising the steps of:
forming a reflective film on the laminating surface of a recorded disk;
forming a silicon film on the laminating surface of a transparent substrate;
applying an energy-radiation setting adhesive onto the silicon film on the laminating surface of the transparent surface by a spinner; and
laminating the recorded disk on the transparent substrate.

2. The method of producing a laminated disk according to claim 1, wherein
said silicon film formed on the laminating surface of the transparent substrate is 1 to 7 nm in thickness.

3. A method of producing a laminated disk, comprising the steps of:
forming a reflective film on the laminating surface of a recorded disk;
forming a silicon compound film on the laminating surface of a transparent substrate;
applying an energy-radiation setting adhesive onto the silicon compound film on the laminating surface of the transparent surface by a spinner; and
laminating the recorded disk on the transparent substrate.

4. The method of producing a laminated disk according to claim 1, wherein
said silicon compound film formed on the laminating surface of the transparent substrate is 1 to 9 nm in thickness.

5. A laminated disk comprising:
a recorded disk having a reflective film on the laminating surface thereof;
a transparent substrate having a silicon film formed on the laminating surface thereof; and
an energy-radiation sitting adhesive layer interposed between the reflective film on the laminating surface of the recorded disk and the silicon film on the laminating surface of the transparent substrate.

6. The laminated disk according to claim 5 , wherein
said silicon film formed on the laminating surface of the transparent substrate is 1 to 7 nm in thickness.

7. A laminated disk comprising:
a recorded disk having a reflective film on the laminating surface thereof;
a transparent substrate having a silicon compound film formed on the laminating surface thereof; and
an energy-radiation setting adhesive layer interposed between the reflective film on the laminating surface of the recorded disk and the silicon compound film on the laminating surface of the transparent substrate.

8. The laminated disk according to claim 1 , wherein
said silicon compound film formed on the laminating surface of the transparent substrate is 1 to 9 nm in thickness.
